# EUROPEAN PATENT APPLICATION

(11) **EP 4 395 440 A1**
(43) Date of publication of application: **03.07.2024**
(21) Application number: 22874747.3
(22) Date of filing: 21.09.2022
(51) Int. Cl.: H04W 72/04, H04W 4/70

(54) **INFORMATION INDICATION METHOD, INFORMATION RECEIVING METHOD, AND ELECTRONIC DEVICE AND STORAGE MEDIUM**

(30) Priority: 30.09.2021 CN 202111165551
(71) Applicant: ZTE Corporation, Shenzhen, Guangdong 518057 (CN)
(72) Inventor: HE, Haigang, Shenzhen, Guangdong 518057 (CN); LU, Youxiong, Shenzhen, Guangdong 518057 (CN); CHEN, Jie, Shenzhen, Guangdong 518057 (CN); LOU, Junpeng, Shenzhen, Guangdong 518057 (CN)
(74) Representative: Regimbeau
(86) International application number: PCT/CN2022/120317
(87) International publication number: WO 2023/051360

(57) **Abstract**

Provided are an information indication method, an information receiving method, an electronic device and a storage medium, where the information indication method includes: sending first control information and second control information; indicating the position of each of multiple time-frequency resources through the first control information, where the multiple time-frequency resources are different from each other, and a time-frequency resource, which is the earliest in terms of time among the multiple time-frequency resources, is denoted as a first time-frequency resource; and indicating beam configuration information of each of multiple non-first time-frequency resources among the multiple time-frequency resources through the first control information or the second control information. Therefore, the accurate configuration of a time-frequency resource beam is achieved such that the measurement accuracy of a reference signal received power can be improved.

## Description

### TECHNICAL FIELD

The present application relates to the field of wireless communication technology, for example, an information indication method, an information receiving method, an electronic device and a storage medium.

### BACKGROUND

In a sidelink communication system, when traffic needs to be transmitted between user equipments (UEs), the traffic data between UEs is not forwarded by a network side, that is, the service data is not forwarded through cellular links between the UEs and a base station but is directly transmitted from a source UE to a target UE through a sidelink. Such a transmission manner is significantly different from the cellular system communications mode in the related art. Sidelink communication has been widely used, and the typical applications include device-to-device (D2D) communication and vehicle-to-everything (V2X) communication. For the users who can apply sidelink communication for near-field communication, in addition to saving wireless spectrum resources, sidelink communication can also reduce the transmission pressure of a core network, reduce the occupation of system resources, and increase the spectral efficiency of the cellular communication system, thereby reducing the communication delay and the network operation cost.

In sidelink communication, a sending device performs resource selection for signaling or data sending. In one manner, the resource selection is implemented by the scheduling of a central node (for example, a base station), and in this manner, the central node decides a resource for sending a signaling and/or data and notifies the resource to a terminal through a signaling. In another manner, the resource selection is implemented by a contention-based resource selection method, and in this manner, the sending device listens to resources within a resource pool to acquire the occupation situations of the resources, and autonomously selects a resource for sending the signaling or data from the resource pool according to the listening result.

In the contention-based resource selection method, the terminal performs two processes including a sensing process and a resource selection process. In the sensing process, the terminal obtains information about the reserved resources of other terminals and acquires information about a resource-related reference signal received power (RSRP), through the reception of sidelink control information (SCI). In the resource selection process, the terminal excludes some resources with high interference based on the sensing result of the sensing process. For example, a resource that is occupied by other terminals and has RSRP higher than a threshold is excluded from a resource selection window. After resource selection, the terminal may further select resources among the remaining resources for signaling or data sending.

When the terminal excludes resources that are occupied by other terminals and have RSRP higher than the threshold, the RSRP of the resources that are indicated by other terminals as occupied resources is obtained from the measurement of demodulation reference signals (DMRS) sent earlier by the other terminals. Currently, sidelink communication is designed mainly for low frequencies, and the RSRP measurement in the related art does not consider the impact of beams. However, sidelink communication for higher frequencies needs to consider the beam characteristics, and since the beams sent by one of the other terminals on two resources in sequence may not be the same, the RSRP measurement result of one of the other terminals on the previous time-frequency resource is not appropriate to be used as the RSRP measurement result on the time-frequency resource at a later moment. In a case where two beams sent by the one of the other terminals in sequence are different, the interference situation of the resource of the one of the other terminals at a later moment cannot be directly inferred from the RSRP measurement result of the one of the other terminals on the previous time-frequency resource.

### SUMMARY

Embodiments of the present application provide an information indication method, an information receiving method, an electronic device and a storage medium.

The embodiments of the present application provide an information indication method, which includes:
first control information and second control information are sent;
a position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource; and
beam configuration information of each of non-first time-frequency resources among the multiple time-frequency resources is indicated through the first control information or the second control information.

The embodiments of the present application further provide an information receiving method, which includes:
first control information and second control information are received;
the position of each of multiple time-frequency resources is determined according to the first control information, where the multiple time-frequency resources are different from each other, and a time-frequency resource, which is the earliest in terms of time among the multiple time-frequency resources, is denoted as a first time-frequency resource; and
beam configuration information of each of non-first time-frequency resources among the multiple time-frequency resources is determined according to the first control information or the second control information.

The embodiments of the present application further provide an information indication method, which includes:
first control information is sent through a first time-frequency resource; and
at least one second time-frequency resource is indicated through the first control information, and the at least one second time-frequency resource is quasi co-located with the first time-frequency resource.

The embodiments of the present application further provide an information receiving method, which includes:
first control information is received on a first time-frequency resource; and
at least one second time-frequency resource indicated through the first control information is determined, where the at least one second time-frequency resource is quasi co-located with the first time-frequency resource.

The embodiments of the present application further provide an electronic device. The electronic device includes one or more processors and a memory configured to store one or more programs.

The one or more programs, when executed by the one or more processors, enable the one or more processors to implement any method in the embodiments of the present application.

The embodiments of the present application further provide a computer-readable storage medium. The computer-readable storage medium is configured to store one or more programs, and the one or more programs are executable by one or more processors to implement any method in the embodiments of the present application.

### BRIEF DESCRIPTION OF DRAWINGS

FIG. 1 is a flowchart of an information indication method according to an embodiment of the present application;
FIG. 2 is another flowchart of an information indication method according to an embodiment of the present application;
FIG. 3 is another flowchart of an information indication method according to an embodiment of the present application;
FIG. 4 is another flowchart of an information indication method according to an embodiment of the present application;
FIG. 5 is another flowchart of an information indication method according to an embodiment of the present application;
FIG. 6 is a flowchart of an information receiving method according to an embodiment of the present application;
FIG. 7 is a flowchart of an information indication method according to an embodiment of the present application;
FIG. 8 is another flowchart of an information indication method according to an embodiment of the present application;
FIG. 9 is a flowchart of an information receiving method according to an embodiment of the present application;
FIG. 10 is an example diagram of an information indication method according to an embodiment of the present application;
FIG. 11 is an example diagram of resource selection according to an embodiment of the present application;
FIG. 12 is an example diagram of an information indication method according to an embodiment of the present application;
FIG. 13 is an example diagram of an information indication method according to an embodiment of the present application;
FIG. 14 is an example diagram of an information indication method according to an embodiment of the present application;
FIG. 15 is an example diagram of an information indication method according to an embodiment of the present application;
FIG. 16 is an example diagram of an information indication method according to an embodiment of the present application;
FIG. 17 is a structural diagram of an information indication apparatus according to an embodiment of the present application;
FIG. 18 is a structural diagram of an information receiving apparatus according to an embodiment of the present application;
FIG. 19 is a structural diagram of an information indication apparatus according to an embodiment of the present application;
FIG. 20 is a structural diagram of an information receiving apparatus according to an embodiment of the present application; and
FIG. 21 is a structural diagram of an electronic device according to an embodiment of the present application.

### DETAILED DESCRIPTION

It is to be understood that the embodiments described herein are intended to explain the present application and are intended not to limit the present application.

Suffixes such as "module", "component" or "unit" used for indicating elements in the subsequent description are used merely for facilitating the description of the present application and have no particular meaning in themselves. Therefore, "module", "component" or "unit" may be used in a mixed manner.

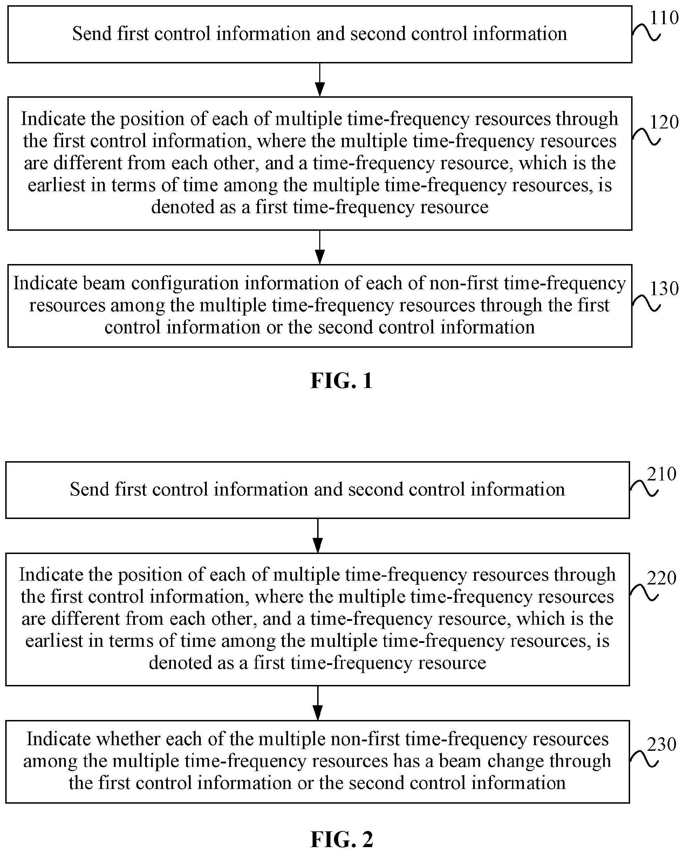

FIG. 1 is a flowchart of an information indication method according to an embodiment of the present application. This embodiment of the present application is applicable to beam indication in sidelink communication. The method may be performed by a terminal device which may be implemented by software and/or hardware. With reference to FIG. 1, the method provided by this embodiment of the present application includes operations 110, 120, and 130.

In operation 110, first control information and second control information are sent.

The first control information and the second control information may be information configured for indicating time-frequency resources, and the first control information and the second control information may occupy different time-frequency resources.

Specifically, a terminal device may send the first control information and the second control information to another terminal device to achieve the transmission of control information.

In operation 120, the position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource.

In this embodiment of the present application, the first control information may indicate the position of each of multiple time-frequency resources, where the term, multiple, may refer to at least two, and then the number of time-frequency resources indicated through the first control information is two or more. Different time-frequency resources may occupy different bandwidths and have different frequency-domain positions. It is to be understood that multiple time-frequency resources may be present in the time domain, and the first one of the multiple time-frequency resources indicated through the first control information may be denoted as the first time-frequency resource.

In operation 130, beam configuration information of each of non-first time-frequency resources among the multiple time-frequency resources is indicated through the first control information or the second control information.

The beam configuration information may be information about configuring a resource beam and may be beam-related information or quasi co-location (QCL)-related information.

Specifically, the beam configuration information of each non-first time-frequency resource among the multiple time-frequency resources may be indicated using the first control information or the second control information.

In this embodiment of the present application, the first control information and the second control information are sent, the position of each of multiple time-frequency resources is indicated through the first control information, the time-frequency resource, which is the earliest in terms of time, is denoted as a first time-frequency resource, and the beam configuration information of each of non-first time-frequency resources among the multiple time-frequency resources is indicated using the first control information or the second control information, thereby achieving the beam configuration of the time-frequency resource and improving the measurement accuracy of a reference signal received power.

Further, based on the above embodiment of the present application, the beam configuration information includes beam-related information or QCL-related information.

In this embodiment of the present application, the beam configuration information may include beam-related information or QCL-related information, and the quasi co-location may include the following two cases.

The first case is whether a non-first time-frequency resource is quasi-co-located with the first time-frequency resource means whether at least one channel contained in the non-first time-frequency resource is quasi-co-located with at least one channel contained in the first time-frequency resource. For example, the non-first time-frequency resource contains a physical sidelink control channel (PSCCH) and a physical sidelink shared channel (PSSCH), and the first time-frequency resource contains a PSCCH and a PSSCH. The non-first time-frequency resource is quasi-co-located with the first time-frequency resource when any one of the following conditions is met:
the PSCCH contained in the non-first time-frequency resource is quasi-co-located with the PSCCH contained in the first time-frequency resource;
the PSSCH contained in the non-first time-frequency resource is quasi-co-located with the PSSCH contained in the first time-frequency resource; or
the PSCCH and the PSSCH contained in the non-first time-frequency resource are quasi co-located with each other, the PSCCH and the PSSCH contained in the first time-frequency resource are quasi co-located with each other, and the PSCCH or PSSCH contained in the non-first time-frequency resource is quasi co-located with the PSCCH or PSSCH contained in the first time-frequency resource.

The second case is whether a non-first time-frequency resource is quasi-co-located with the first time-frequency resource means whether at least one type of DMRS contained in the non-first time-frequency resource is quasi-co-located with at least one type of DMRS contained in the first time-frequency resource. For example, the non-first time-frequency resource contains a PSCCH DMRS and a PSSCH DMRS, and the first time-frequency resource contains a PSCCH DMRS and a PSSCH DMRS. The non-first time-frequency resource is quasi-co-located with the first time-frequency resource when any one of the following conditions is met:
the PSCCH DMRS contained in the non-first time-frequency resource is quasi-co-located with the PSCCH DMRS contained in the first time-frequency resource;
the PSSCH DMRS contained in the non-first time-frequency resource is quasi-co-located with the PSSCH DMRS contained in the first time-frequency resource; or
the PSCCH DMRS and the PSSCH DMRS contained in the non-first time-frequency resource are quasi co-located with each other, the PSCCH DMRS and the PSSCH DMRS contained in the first time-frequency resource are quasi co-located with each other, and the PSCCH DMRS/PSSCH DMRS contained in the non-first time-frequency resource is quasi co-located with the PSCCH DMRS/PSSCH DMRS contained in the first time-frequency resource.

The beam-related information may include information for determining whether a beam changes, and whether a beam changes includes the following two cases.

The first case is whether a non-first time-frequency resource has a beam change relative to the first time-frequency resource means whether at least one channel contained in the non-first time-frequency resource has a beam change relative to at least one channel contained in the first time-frequency resource. For example, the non-first time-frequency resource contains a PSCCH and a PSSCH, and the first time-frequency resource contains a PSCCH and a PSSCH. The non-first time-frequency resource has a beam change relative to the first time-frequency resource when any one of the following conditions is met:
the PSCCH contained in the non-first time-frequency resource has a beam change relative to the PSCCH contained in the first time-frequency resource;
the PSSCH contained in the non-first time-frequency resource has a beam change relative to the PSSCH contained in the first time-frequency resource; or
beams of the PSCCH and the PSSCH contained in the non-first time-frequency resource are the same, beams of the PSCCH and the PSSCH contained in the first time-frequency resource are the same, and the PSCCH or PSSCH contained in the non-first time-frequency resource has a beam change relative to the PSCCH or PSSCH contained in the first time-frequency resource.

The second case is whether a non-first time-frequency resource has a beam change relative to the first time-frequency resource means whether at least one type of DMRS contained in each non-first time-frequency resource has a beam change relative to at least one type of DMRS contained in the first time-frequency resource. For example, the non-first time-frequency resource contains a PSCCH DMRS and a PSSCH DMRS, and the first time-frequency resource contains a PSCCH DMRS and a PSSCH DMRS. The non-first time-frequency resource has a beam change relative to the first time-frequency resource when any one of the following conditions is met:
the PSCCH DMRS contained in the non-first time-frequency resource has a beam change relative to the PSCCH DMRS contained in the first time-frequency resource;
the PSSCH DMRS contained in the non-first time-frequency resource has a beam change relative to the PSSCH DMRS contained in the first time-frequency resource; or
beams of the PSCCH DMRS and the PSSCH DMRS contained in the non-first time-frequency resource are the same, beams of the PSCCH DMRS and the PSSCH DMRS contained in the first time-frequency resource are the same, and the PSCCH DMRS/PSSCH DMRS contained in the non-first time-frequency resource has a beam change relative to the PSCCH DMRS/PSSCH DMRS contained in the first time-frequency resource.

Further, based on the aforementioned embodiment of the present application, the multiple non-first time-frequency resources include a second time-frequency resource among the multiple time-frequency resources, where the second time-frequency resource is a time-frequency resource which is the second earliest in terms of time among the multiple time-frequency resources.

In this embodiment of the present application, the multiple non-first time-frequency resources may include a time-frequency resource which is the second earliest in terms of time among the multiple time-frequency resources.

Further, based on the aforementioned embodiment of the present application, the multiple non-first time-frequency resources include all time-frequency resources other than the first time-frequency resource among the multiple time-frequency resources.

In this embodiment of the present application, the multiple non-first time-frequency resources may include all time-frequency resources other than the time-frequency resource which is the earliest in terms of time among the multiple time-frequency resources.

FIG. 2 is another flowchart of an information indication method according to an embodiment of the present application. This embodiment of the present application is an embodiment based on the aforementioned embodiment of the present application. With reference to FIG. 2, the method provided by this embodiment of the present application specifically includes operations 210, 220, and 230.

In operation 210, first control information and second control information are sent.

In operation 220, the position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource.

In operation 230, whether each of the multiple non-first time-frequency resources has a beam change is indicated through the first control information or the second control information.

In this embodiment of the present application, whether each of the non-first time-frequency resources among the multiple time-frequency resources has a beam change may be indicated through the first control information or the second control information, and the beam change includes the following two cases.

In the first case of the two cases, whether a non-first time-frequency resource has a beam change relative to the first time-frequency resource means whether at least one channel contained in the non-first time-frequency resource has a beam change relative to at least one channel contained in the first time-frequency resource. For example, the non-first time-frequency resource contains a PSCCH and a PSSCH, and the first time-frequency resource contains a PSCCH and a PSSCH. A non-first time-frequency resource has a beam change relative to the first time-frequency resource when any one of the following conditions is met:
the PSCCH DMRS contained in the non-first time-frequency resource has a beam change relative to the PSCCH DMRS contained in the first time-frequency resource;
the PSSCH DMRS contained in the non-first time-frequency resource has a beam change relative to the PSSCH DMRS contained in the first time-frequency resource; or
beams of the PSCCH DMRS and the PSSCH DMRS contained in the non-first time-frequency resource are the same, beams of the PSCCH DMRS and the PSSCH DMRS contained in the first time-frequency resource are the same, and the PSCCH DMRS/PSSCH DMRS contained in the non-first time-frequency resource has a beam change relative to the PSCCH DMRS/PSSCH DMRS contained in the first time-frequency resource.

Further, based on the aforementioned embodiments of the present application, the beam change refers to whether the beam of each of the non-first time-frequency resources is changed relative to the beam of the first time-frequency resource.

Specifically, the beam change may include that the beam of each of the multiple non-first time-frequency resources among the multiple time-frequency resources is different from the beam of the first time-frequency resource.

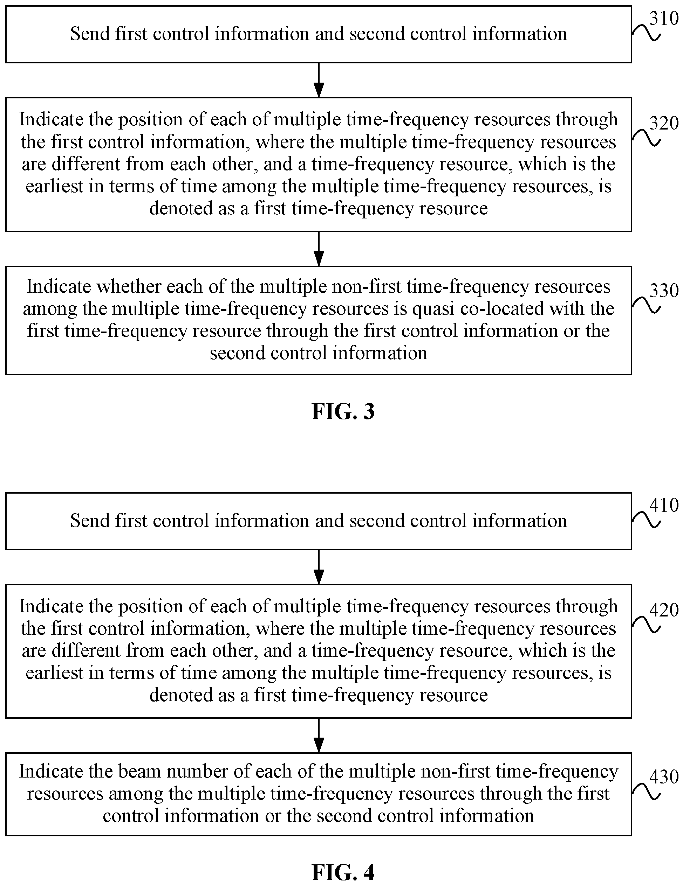

FIG. 3 is another flowchart of an information indication method according to an embodiment of the present application. This embodiment of the present application is an embodiment based on the aforementioned embodiments of the present application. With reference to FIG. 3, the method provided by this embodiment of the present application specifically includes operations 310, 320, and 330.

In operation 310, first control information and second control information are sent.

In operation 320, the position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource.

In operation 330, whether each of the multiple non-first time-frequency resources among the multiple time-frequency resources is quasi co-located with the first time-frequency resource is indicated through the first control information or the second control information.

Specifically, whether each of the multiple non-first time-frequency resources among the multiple time-frequency resources is quasi co-located with the first time-frequency resource may be indicated through the first control information or the second control information, and the quasi co-location may include the following two cases.

In the first case of the two cases, whether a non-first time-frequency resource is quasi-co-located with the first time-frequency resource means whether at least one channel contained in the non-first time-frequency resource is quasi-co-located with at least one channel contained in the first time-frequency resource. For example, the non-first time-frequency resource contains a PSCCH and a PSSCH, and the first time-frequency resource contains a PSCCH and a PSSCH. A non-first time-frequency resource is quasi-co-located with the first time-frequency resource when any one of the following conditions is met:
the PSCCH contained in the non-first time-frequency resource is quasi-co-located with the PSCCH contained in the first time-frequency resource;
the PSSCH contained in the non-first time-frequency resource is quasi-co-located with the PSSCH contained in the first time-frequency resource; or,
the PSCCH and the PSSCH contained in the non-first time-frequency resource are quasi co-located with each other, the PSCCH and the PSSCH contained in the first time-frequency resource are quasi co-located with each other, and the PSCCH or PSSCH contained in the non-first time-frequency resource is quasi co-located with the PSCCH or PSSCH contained in the first time-frequency resource.

In the second case of the two cases, whether a non-first time-frequency resource is quasi-co-located with the first time-frequency resource means whether at least one type of DMRS contained in the non-first time-frequency resource is quasi-co-located with at least one type of DMRS contained in the first time-frequency resource. For example, the non-first time-frequency resource contains a PSCCH DMRS and a PSSCH DMRS, and the first time-frequency resource contains a PSCCH DMRS and a PSSCH DMRS. A non-first time-frequency resource is quasi-co-located with the first time-frequency resource when any one of the following conditions is met:
the PSCCH DMRS contained in the non-first time-frequency resource is quasi-co-located with the PSCCH DMRS contained in the first time-frequency resource;
the PSSCH DMRS contained in the non-first time-frequency resource is quasi-co-located with the PSSCH DMRS contained in the first time-frequency resource; or
the PSCCH DMRS and the PSSCH DMRS contained in the non-first time-frequency resource are quasi co-located with each other, the PSCCH DMRS and the PSSCH DMRS contained in the first time-frequency resource are quasi co-located with each other, and the PSCCH DMRS/PSSCH DMRS contained in the non-first time-frequency resource is quasi co-located with the PSCCH DMRS/PSSCH DMRS contained in the first time-frequency resource.

FIG. 4 is another flowchart of an information indication method according to an embodiment of the present application. This embodiment of the present application is an embodiment based on the aforementioned embodiments of the present application. With reference to FIG. 4, the method provided by this embodiment of the present application specifically includes operations 410, 420, and 430.

In operation 410, first control information and second control information are sent.

In operation 420, the position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource.

In operation 430, the beam number of each of the multiple non-first time-frequency resources among the multiple time-frequency resources is indicated through the first control information or the second control information.

Specifically, the beam number of a beam used by each of the multiple non-first time-frequency resources may be indicated through the first control information or the second control information, where the beam numbers may be configured for identifying different beams, and different beams may have different directions.

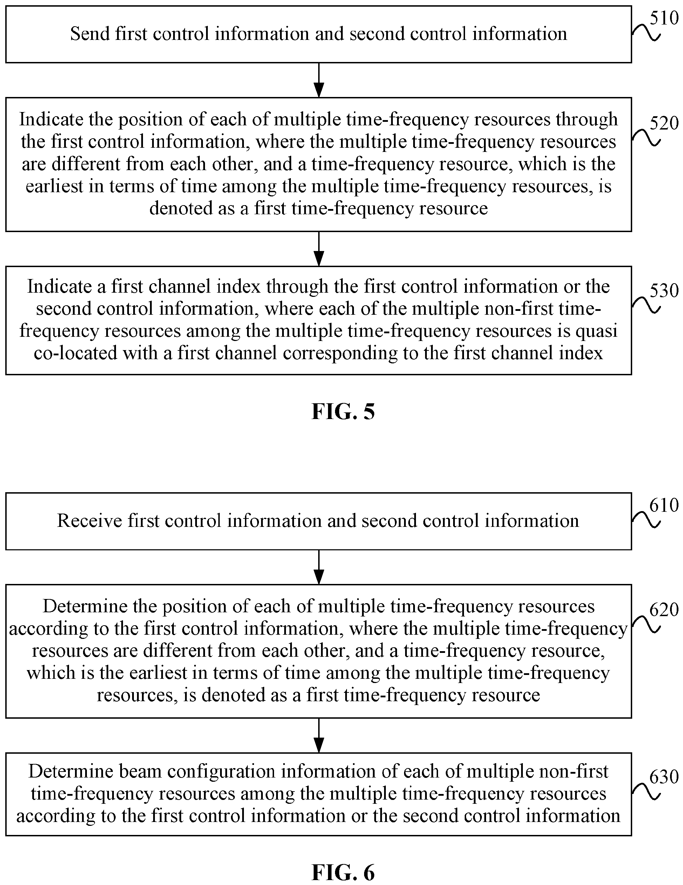

FIG. 5 is another flowchart of an information indication method according to an embodiment of the present application. This embodiment of the present application is an embodiment based on the aforementioned embodiments of the present application. With reference to FIG. 5, the method provided by this embodiment of the present application specifically includes operations 510, 520, and 530.

In operation 510, first control information and second control information are sent.

In operation 520, the position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource.

In operation 530, a first channel index is indicated through the first control information or the second control information, where each of the multiple non-first time-frequency resources among the multiple time-frequency resources is quasi co-located with a first channel corresponding to the first channel index.

In this embodiment of the present application, a terminal may indicate the first channel index to another terminal through the first control information or the second control information to make each of the multiple non-first time-frequency resources quasi co-located with the first channel corresponding to the first channel index, where the first channel is a channel before the first control information and the second control information.

Further, based on the aforementioned embodiments of the present application, the operation where the first channel index is indicated through the first control information or the second control information, where each of the multiple non-first time-frequency resources is quasi co-located with a first channel corresponding to the first channel index, includes the following operation.

A sidelink synchronization signal block (S-SSB) index is indicated through the first control information or the second control information, where each of the multiple non-first time-frequency resources is quasi co-located with an S-SSB channel corresponding to the S-SSB index.

Further, based on the aforementioned embodiments of the present application, the operation where the first channel index is indicated through the first control information or the second control information, where each of the multiple non-first time-frequency resources is quasi co-located with a first channel corresponding to the first channel index, includes the following operation.

A sidelink channel state information-reference signal (SL-CSI-RS) index is indicated through the first control information or the second control information, where each of the multiple non-first time-frequency resources is quasi co-located with an SL-CSI-RS corresponding to the SL-CSI-RS index.

Further, based on the aforementioned embodiments of the present application, the operation where the first channel index is indicated through the first control information or the second control information, where each of the multiple non-first time-frequency resources is quasi co-located with a first channel corresponding to the first channel index, includes the following operation.

APSCCH or PSSCH index is indicated through the first control information or the second control information, where each of the multiple non-first time-frequency resources is quasi co-located with a PSCCH or PSSCH corresponding to the PSCCH or PSSCH index.

In this embodiment of the present application, the PSCCH index or the PSSCH index may be indicated through the first control information or the second control information to make each of the multiple non-first time-frequency resources among the time-frequency resources is quasi co-located with a PSCCH or PSSCH corresponding to the PSCCH index or the PSSCH index.

FIG. 6 is a flowchart of an information receiving method according to an embodiment of the present application. This embodiment of the present application is applicable to beam indication in sidelink communication. The method may be performed by a terminal device which may be implemented by software and/or hardware. With reference to FIG. 6, the method provided by this embodiment of the present application includes operations 610, 620, and 630.

In operation 610, first control information and second control information are received.

Specifically, a terminal receives first control information and second control information sent by another terminal.

In operation 620, the position of each of multiple time-frequency resources is determined according to the first control information, where the multiple time-frequency resources are different from each other, and a time-frequency resource, which is the earliest in terms of time among the multiple time-frequency resources, is denoted as a first time-frequency resource.

In this embodiment of the present application, the indicated multiple time-frequency resources are determined according to the first control information, and the time-frequency resource which is the earliest in terms of time is denoted as a first time-frequency resource.

In operation 630, beam configuration information of each of multiple non-first time-frequency resources among the multiple time-frequency resources is determined according to the first control information or the second control information.

In this embodiment of the present application, the terminal receives the first control information or the second control information and then may determine the beam configuration information of each of multiple non-first time-frequency resources indicated by the preceding control information, and the beam configuration information may include beam-related information or QCL-related information.

In this embodiment of the present application, the first control information and the second control information are received, the position of each of multiple time-frequency resources indicated through the first control information is acquired, the time-frequency resource, which is the earliest in terms of time among the multiple time-frequency resources, is denoted as a first time-frequency resource, and the indicated beam configuration information of each of multiple non-first time-frequency resources is determined according to the first control information or the second control information, thereby achieving the beam configuration of the time-frequency resource and improving the measurement accuracy of a reference signal received power.

Further, based on the aforementioned embodiments of the present application, the beam configuration information includes beam-related information or QCL-related information.

Further, based on the aforementioned embodiments of the present application, the multiple non-first time-frequency resources include a second time-frequency resource among the time-frequency resources, where the second time-frequency resource is a time-frequency resource which is the second earliest in terms of time among the multiple time-frequency resources.

Further, based on the aforementioned embodiments of the present application, the multiple non-first time-frequency resources include all time-frequency resources other than the first time-frequency resource among the multiple time-frequency resources.

Further, based on the aforementioned embodiments of the present application, a candidate time-frequency resource is excluded according to the beam configuration information.

In this embodiment of the present application, the candidate time-frequency resource may be excluded according to the indicated beam configuration information to reduce the time-frequency resources affecting the measurement of the RSRP, thereby improving communication quality. The candidate resource may be one or more time-frequency resources within a resource selection window of the terminal.

Further, based on the aforementioned embodiments of the present application, the condition for excluding the candidate time-frequency resource at least includes: an RSRP measurement value is higher than a threshold.

Specifically, the candidate time-frequency resource whose RSRP measurement value is higher than the threshold may be excluded.

Further, based on the aforementioned embodiments of the present application, the RSRP measurement value is obtained at least by measuring a DMRS of a target channel, where an index of the target channel is the same as an index indicated through the first control information.

Specifically, the RSRP measurement value may be obtained by performing an RSRP measurement on the channel corresponding to the index indicated through the first control information.

Further, based on the aforementioned embodiments of the present application, the RSRP measurement value is obtained at least by measuring a DMRS of a target channel, where a beam number of the target channel is the same as a beam number indicated through the first control information.

In this embodiment of the present application, the RSRP measurement value may be determined by measuring a DMRS corresponding to the beam number indicated through the first control information.

Further, based on the aforementioned embodiments of the present application, the target channel is a sidelink synchronization signal block (S-SSB) channel, the index is an S-SSB index, and the DMRS of the target channel includes a physical sidelink broadcast channel (PSBCH) DMRS.

Specifically, the RSRP measurement value may be determined by measuring a PSBCH DMRS indicated through the first control information.

Further, based on the aforementioned embodiments of the present application, the condition for excluding the candidate time-frequency resource includes at least one of the following conditions.

The sum of an RSRP measurement value and an RSRP compensation value is higher than a threshold.

The difference between an RSRP measurement value and an RSRP compensation value is higher than a threshold.

Specifically, a candidate time-frequency resource for which the sum of the RSRP measurement value and the RSRP compensation value is higher than the threshold may be excluded, or, a candidate time-frequency resource for which the difference between the RSRP measurement value and the RSRP compensation value is higher than the threshold may be excluded.

Further, based on the aforementioned embodiments of the present application, the RSRP compensation value is pre-configured or configured through radio resource control (RRC) information.

In this embodiment of the present application, the RSRP compensation value may be pre-configured or configured through RRC information.

Further, based on the aforementioned embodiments of the present application, the RSRP compensation value is the difference between a first measured RSRP and a second measured RSRP.

The DMRS for measuring the first measured RSRP is a DMRS contained in the first time-frequency resource.

The DMRS for measuring the second measured RSRP is quasi co-located with each of the multiple non-first time-frequency resources.

Further, based on the aforementioned embodiments of the present application, the condition for excluding the candidate time-frequency resource at least includes: an RSRP is greater than a threshold, where when a first condition is met, the RSRP is the sum of an RSRP measurement value and an RSRP compensation value, and when the first condition is not met, the RSRP is an RSRP measurement value.

Specifically, the time-frequency resource for which the RSRP is greater than the threshold among the candidate time-frequency resource may be excluded, where the RSRP is the sum of the RSRP measurement value and the RSRP compensation value in the first condition, and the RSRP is the sum of the RSRP measurement value otherwise.

Further, based on the aforementioned embodiments of the present application, in a case where the first condition is met, the RSRP compensation value is a non-zero value, and when the first condition is not met, the RSRP compensation value is 0.

Further, based on the aforementioned embodiments of the present application, the first condition includes: the first control information received or the second control information received indicates that each of the multiple non-first time-frequency resources has a beam change.

Further, based on the aforementioned embodiments of the present application, the first condition includes: the first control information received or the second control information received indicates that each of the multiple non-first time-frequency resources has no quasi co-location relationship with the first time-frequency resource.

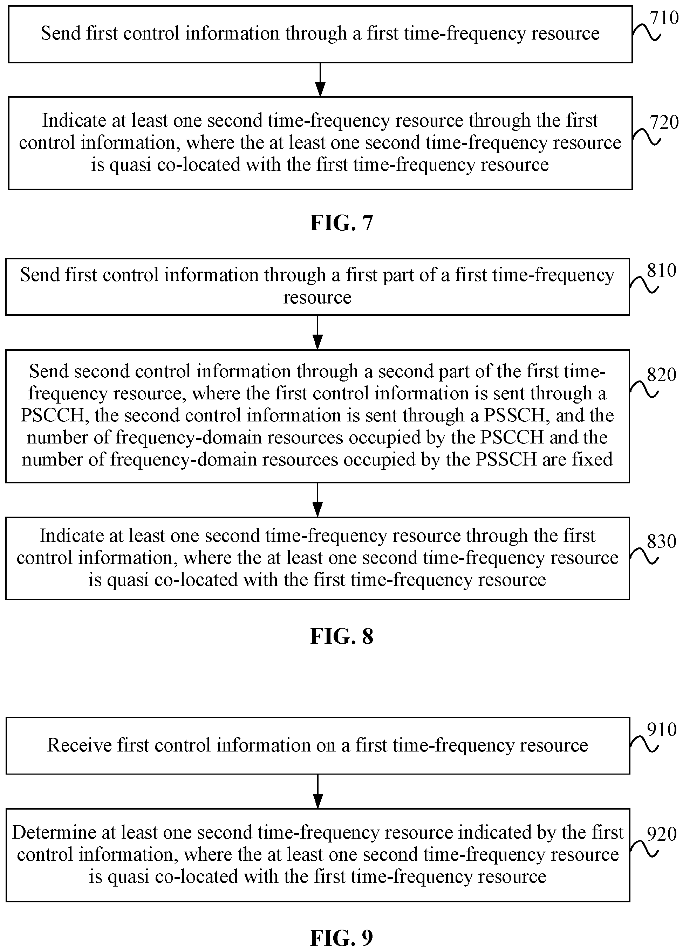

FIG. 7 is a flowchart of an information indication method according to an embodiment of the present application. This embodiment of the present application is applicable to beam indication in sidelink communication. The method may be performed by a terminal device which may be implemented by software and/or hardware. With reference to FIG. 7, the method provided by this embodiment of the present application includes operations 710 and 720.

In operation 710, first control information is sent through a first time-frequency resource.

The first time-frequency resource may be a time-frequency resource for transmitting first control information, the first time-frequency resource may be an inserted time-frequency resource, and the first time-frequency resource may be used only for transmitting the first control information.

Specifically, the first control information may be transmitted on the first time-frequency resource.

In operation 720, at least one second time-frequency resource is indicated through the first control information, and the at least one second time-frequency resource is quasi co-located with the first time-frequency resource.

In this embodiment of the present application, at least one second time-frequency resource is indicated through the first control information so that one or more second time-frequency resources are quasi co-located with the first time-frequency resource.

In this embodiment of the present application, the first control information is transmitted through the first time-frequency resource, and at least one second time-frequency resource is indicated through the first control information so that the at least one second time-frequency resource is quasi co-located with the first time-frequency resource, thereby improving the accuracy of a reference signal received power.

Further, based on the aforementioned embodiments of the present application, the first control information is sent through a PSCCH, where the PSCCH occupies a fixed number of frequency-domain resources.

In this embodiment of the present application, the first control information is sent by a PSCCH, and the PSCCH is composed of a fixed number of frequency-domain resources.

Further, based on the aforementioned embodiments of the present application, the time interval between the first time-frequency resource occupied by the PSCCH that sends the first control information and the first one of the at least one second time-frequency resource is greater than or equal to a time threshold.

Specifically, the time interval between the first time-frequency resource and each of the at least one second time-frequency resource is greater than or equal to a time threshold.

FIG. 8 is another flowchart of an information indication method according to an embodiment of the present application. This embodiment of the present application is an embodiment based on the aforementioned embodiments of the present application. With reference to FIG. 8, the method provided by this embodiment of the present application specifically includes operations 810, 820, and 830.

In operation 810, first control information is sent through a first part of a first time-frequency resource.

Specifically, the first control information is sent to another terminal through a first part of a first time-frequency resource.

In operation 820, second control information is sent through a second part of the first time-frequency resource, where the first control information is sent through a PSCCH, the second control information is sent through a PSSCH, and the number of frequency-domain resources occupied by the PSCCH and the number of frequency-domain resources occupied by the PSSCH are fixed.

Specifically, the second control information is sent on the PSSCH, and the PSCCH that sends the first control information and the PSSCH that sends the second control information occupy a fixed number of frequency-domain resources, respectively.

In operation 830, at least one second time-frequency resource is indicated through the first control information, and the at least one second time-frequency resource is quasi co-located with the first time-frequency resource.

Further, based on the aforementioned embodiments of the present application, the time interval between the first time-frequency resource and the first one of the at least one second time-frequency resource is greater than or equal to a time threshold, where the first time-frequency resource is occupied by the PSCCH and the PSSCH.

In this embodiment of the present application, the time interval between the first time-frequency resource occupied by the PSCCH that sends the first control information and the PSSCH that sends the second control information and a second time-frequency resource that is the earliest in terms of time among the at least one second time-frequency resource is greater than or equal to a time threshold.

FIG. 9 is a flowchart of an information receiving method according to an embodiment of the present application. This embodiment of the present application is applicable to beam indication in sidelink communication. The method may be performed by a terminal device, which may be implemented by software and/or hardware. With reference to FIG. 9, the information receiving method provided by this embodiment of the present application includes operations 910 and 920.

In operation 910, first control information is received on a first time-frequency resource.

Specifically, a terminal may receive the first control information that is sent by another terminal through the first time-frequency resource.

In operation 920, at least one second time-frequency resource indicated through the first control information is determined, where the at least one second time-frequency resource is quasi co-located with the first time-frequency resource.

In this embodiment of the present application, at least one second time-frequency resource indicated through the first control information is acquired so that one or more second time-frequency resources are quasi co-located with the first time-frequency resource.

In this embodiment of the present application, the first control information on the first time-frequency resource is received, and at least one second time-frequency resource corresponding to the first control information is determined so that the at least one second time-frequency resource is quasi co-located with the first time-frequency resource, thereby improving the determination accuracy of a time-frequency resource beam and improving the accuracy of a reference signal received power.

Further, based on the aforementioned embodiments of the present application, the first control information is sent through a PSCCH, where the PSCCH occupies a fixed number of frequency-domain resources.

Further, based on the aforementioned embodiments of the present application, the time interval between the first time-frequency resource and the first one of the at least one second time-frequency resource is greater than or equal to a time threshold, where the first time-frequency resource is occupied by the PSCCH that sends the first control information.

Further, based on the aforementioned embodiments of the present application, the information receiving method further includes that: second control information is received, where the first control information is sent through a PSCCH, the second control information is sent through a PSSCH, and the number of frequency-domain resources occupied by the PSCCH and the number of frequency-domain resources occupied by the PSSCH are fixed.

Specifically, the second control information is received on the PSSCH, and the PSCCH that sends the first control information and the PSSCH that sends the second control information occupy a fixed number of frequency-domain resources, respectively.

Further, based on the aforementioned embodiments of the present application, the time interval between the first time-frequency resource occupied by the PSCCH and the PSSCH and the first one of the at least one second time-frequency resource is greater than or equal to a time threshold.

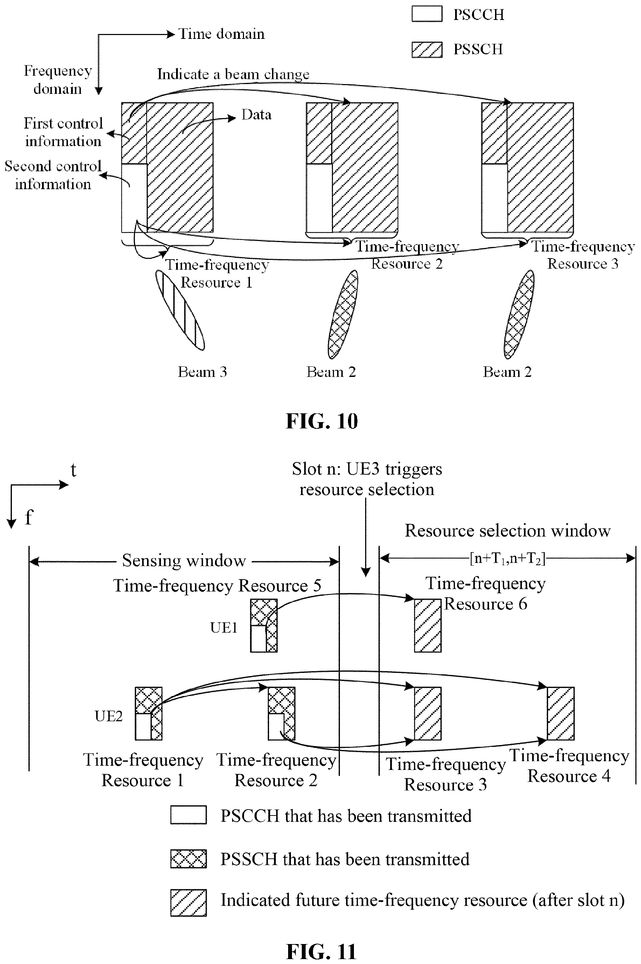

In an example embodiment, with the information indication method in which whether a beam changes is indicated as an example, FIG. 10 is an example diagram of an information indication method according to an embodiment of the present application. A first terminal sends first control information and second control information. X bit fields in the first control information indicate the positions of multiple time-frequency resources, and the time-frequency positions of any two time-frequency resources among the multiple time-frequency resources are different from each other. In FIG. 10, Time-frequency Resource 1 contains a PSCCH and a PSSCH. The PSCCH is used for carrying the first control information, and the PSSCH is used for carrying second control information and data information. In FIG. 10, multiple time-frequency resources, which are indicated through the first control information within the range of Time-frequency Resource 1, are Time-frequency Resource 1, Time-frequency Resource 2, and Time-frequency Resource 3. Among the multiple time-frequency resources indicated through the first control information, the time-frequency resource which is the earliest in the time domain is denoted as a first time-frequency resource, and the remaining time-frequency resources are denoted as non-first time-frequency resources.

In FIG. 10, for the PSCCH and the PSSCH corresponding to Time-frequency Resource 1, the transmit beam corresponding thereto is Beam 3. For the PSCCHs and the PSSCHs corresponding to Time-frequency Resource 2 and Time-frequency Resource 3, the transmit beam corresponding thereto is Beam 2.

In FIG. 10, the first terminal indicates whether the beam of a non-first time-frequency resource changes through the second control information in Time-frequency Resource 1. For example, the second control information contains multiple bits, one of the bits is used for indicating whether the beam of one non-first time-frequency resource changes, Bit 0 indicates that the beam of the one non-first time-frequency resource does not change, and Bit 1 indicates that the beam of the one non-first time-frequency resource changes. When the beam changes, the transmit beam of the one non-first time-frequency resource and the transmit beam of the first time-frequency resource are different from each other. When the beam does not change, the transmit beam of the one non-first time-frequency resource is the same as the transmit beam of the first time-frequency resource.

As shown in FIG. 11, a second terminal is UE3, and for the second terminal, resource selection is triggered within slot n, and resources are selected within a resource selection window [*n* + *T*₁, *n* + *T*₂] for PSCCH and PSSCH transmission. The process of resource selection is as follows.

Step 1: Among multiple candidate resources contained within the resource selection window [*n* + *T*₁, *n* + *T*₂]*,* the resources overlapping with time-frequency resources indicated through the first control information from other UEs and having RSRP greater than an RSRP threshold are excluded.

Step 2: After the resource exclusion in Step 1 is completed, the second terminal randomly selects one or more resources from the remaining candidate resources for sending the PSCCH and the PSSCH of the second terminal.

In this embodiment, when a first condition is met, the RSRP in Step 1 is the sum of a measured RSRP and an RSRP compensation value; and when the first condition is not met, the RSRP in Step 1 is the measured RSRP.

The first condition means that the second control information received by the second terminal indicates that the beam of a non-first time-frequency resource changes.

Whether a non-first time-frequency resource has a beam change relative to the first time-frequency resource means whether a beam change occurs in multiple channels contained in the non-first time-frequency resource relative to multiple channels contained in the first time-frequency resource. For example, the non-first time-frequency resource contains a PSCCH and a PSSCH, and the first time-frequency resource contains a PSCCH and a PSSCH. A non-first time-frequency resource has a beam change relative to the first time-frequency resource when any one of the following conditions is met:
the PSCCH contained in the non-first time-frequency resource has a beam change relative to the PSCCH contained in the first time-frequency resource;
the PSSCH contained in the non-first time-frequency resource has a beam change relative to the PSSCH contained in the first time-frequency resource; or
beams of the PSCCH and the PSSCH contained in the non-first time-frequency resource are the same, beams of the PSCCH and the PSSCH contained in the first time-frequency resource are the same, and the PSCCH or PSSCH contained in the non-first time-frequency resource has a beam change relative to the PSCCH or PSSCH contained in the first time-frequency resource.

Alternatively, whether a non-first time-frequency resource has a beam change relative to the first time-frequency resource is whether multiple types of DMRSs contained in the non-first time-frequency resource have a beam change relative to multiple types of DMRSs contained in the first time-frequency resource. For example, the non-first time-frequency resource contains a PSCCH DMRS and a PSSCH DMRS, and the first time-frequency resource contains a PSCCH DMRS and a PSSCH DMRS. A non-first time-frequency resource has a beam change relative to the first time-frequency resource when any one of the following conditions is met:
the PSCCH DMRS contained in the non-first time-frequency resource has a beam change relative to the PSCCH DMRS contained in the first time-frequency resource;
the PSSCH DMRS contained in the non-first time-frequency resource has a beam change relative to the PSSCH DMRS contained in the first time-frequency resource; or
beams of the PSCCH DMRS and the PSSCH DMRS contained in the non-first time-frequency resource are the same, beams of the PSCCH DMRS and the PSSCH DMRS contained in the first time-frequency resource are the same, and the PSCCH DMRS/PSSCH DMRS contained in the non-first time-frequency resource has a beam change relative to the PSCCH DMRS/PSSCH DMRS contained in the first time-frequency resource.

In addition, the manner of acquiring the preceding measured RSRP is described below using examples. In FIG. 11, when Time-frequency Resource 3 is one candidate resource within the slot [n + *T*₁, n + *T*₂]*,* the measured RSRP of Time-frequency Resource 3 is obtained through the measurement of the PSCCH DMRS or the PSSCH DMRS in Time-frequency Resource 2 and in combination with the indicated beam information on Time-frequency Resource 3. Alternatively, the measured RSRP of Time-frequency Resource 3 is obtained through the measurement of the PSCCH DMRS or the PSSCH DMRS in Time-frequency Resource 1 and in combination with the indicated beam information on Time-frequency Resource 3. When the indicated beam information on Time-frequency Resource 3 is different from the beam on Time-frequency Resource 1, the RSRP compensation value is determined to be y, and the measured RSRP of Time-frequency Resource 3 is the measured RSRP of Time-frequency Resource 1 plus y.

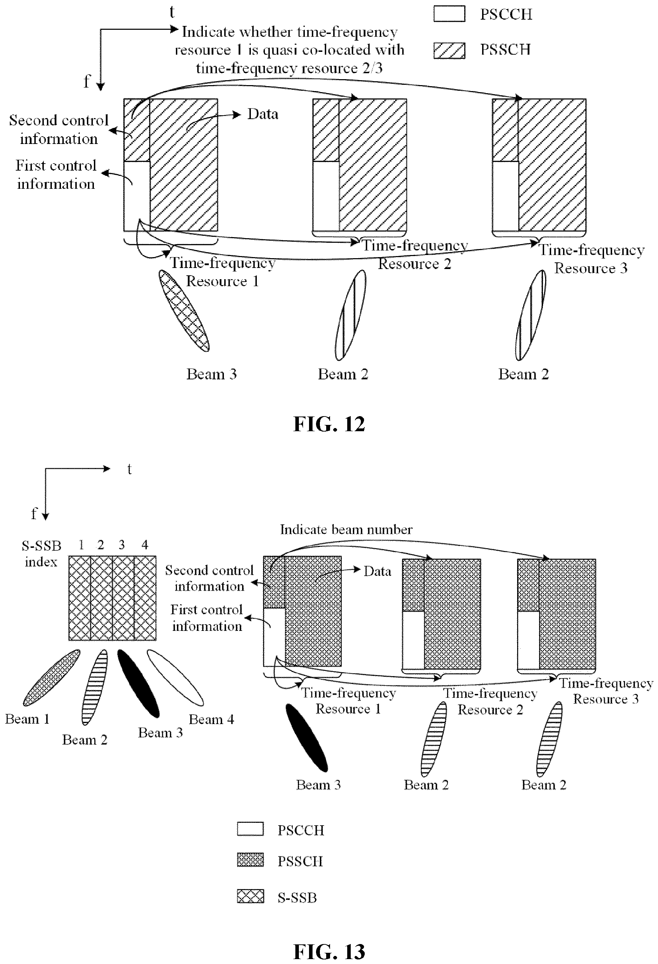

In an example embodiment, with the information indication method in which whether a first time-frequency resource is quasi co-located with a non-first time-frequency resource is indicated as an example, FIG. 12 is an example diagram of an information indication method according to an embodiment of the present application. With reference to FIG. 12, a first terminal sends first control information and second control information. X bit fields in the first control information indicate the positions of multiple time-frequency resources, and the time-domain positions of any two time-frequency resources among the multiple time-frequency resources are different from each other. In FIG. 12, Time-frequency Resource 1 contains a PSCCH and a PSSCH. The PSCCH is used for carrying the first control information, and the PSSCH is used for carrying second control information and data information. In FIG. 12, multiple time-frequency resources indicated through the first control information within the range of Time-frequency Resource 1 are Time-frequency Resource 1, Time-frequency Resource 2, and Time-frequency Resource 3. Among the multiple time-frequency resources indicated through the first control information, the time-frequency resource which is the earliest in the time domain is denoted as a first time-frequency resource, and the remaining time-frequency resources are denoted as non-first time-frequency resources.

In FIG. 12, for the PSCCH and the PSSCH corresponding to Time-frequency Resource 1, the transmit beam corresponding thereto is Beam 3. For the PSCCHs and the PSSCHs corresponding to Time-frequency Resource 2 and Time-frequency Resource 3, the transmit beam corresponding thereto is Beam 2.

In FIG. 12, the first terminal indicates whether a non-first time-frequency resource is quasi co-located with the first time-frequency resource through the second control information in Time-frequency Resource 1. For example, the second control information contains multiple bits, one of the bits is used for indicating whether a non-first time-frequency resource is quasi co-located with the first time-frequency resource, and when the one of the bits is 0, it indicates that the non-first time-frequency resource is not quasi co-located with the first time-frequency resource, and when the one of the bits is 1, it indicates that the non-first time-frequency resource is quasi co-located with the first time-frequency resource. When it is indicated that a non-first time-frequency resource is quasi co-located with the first time-frequency resource, the non-first time-frequency resource and the first time-frequency resource use the same transmit beam. When it is indicated that a non-first time-frequency resource is not quasi co-located with the first time-frequency resource, the non-first time-frequency resource and the first time-frequency resource use different transmit beams.

In FIG. 12, the second control information within the range of Time-frequency Resource 1 indicates that the non-first time-frequency resource is not quasi co-located with the first time-frequency resource.

With reference to FIG. 11, a second terminal is UE3, and for the second terminal, resource selection is triggered within slot n, and resources are selected within a resource selection window [*n* + *T*₁, *n* + *T*₂] for PSCCH and PSSCH transmission. The process of resource selection is as follows.

Step 1: Among multiple candidate resources contained within the resource selection window [*n* + *T*₁, *n* + *T*₂]*,* the resources overlapping with time-frequency resources indicated through the first control information from other UEs and having RSRP greater than an RSRP threshold are excluded are excluded.

Step 2: After the resource exclusion in Step 1 is completed, the second terminal randomly selects one or more resources from the remaining candidate resources for sending the PSCCH and the PSSCH of the second terminal.

In this embodiment, when a first condition is met, the RSRP in Step 1 is the sum of a measured RSRP and an RSRP compensation value; when the first condition is not met, the RSRP in Step 1 is the measured RSRP.

The first condition means that the second control information received by the second terminal indicates that a non-first time-frequency resource is not quasi co-located with the first time-frequency resource.

In addition, the manner of acquiring the preceding measured RSRP is described below using examples.In FIG. 11, when Time-frequency Resource 3 is one candidate resource within the slot [n + *T*₁, n + *T*₂]*,* the measured RSRP of Time-frequency Resource 3 is obtained through the measurement of the PSCCH DMRS or the PSSCH DMRS in Time-frequency Resource 2. Alternatively, the measured RSRP of Time-frequency Resource 3 is obtained through the measurement of the PSCCH DMRS or the PSSCH DMRS in Time-frequency Resource 1.

In an example embodiment, with the information indication method in which a beam number is indicated as an example, FIG. 13 is an example diagram of an information indication method according to an embodiment of the present application. With reference to FIG. 13, a first terminal sends N S-SSB channels, each of which is sent at a fixed time-frequency resource position, at N different fixed time-frequency resource positions, and it is specified that the beam numbers of the N S-SSB channels are 1 to N, respectively.

As shown in FIG. 13, the first terminal sends first control information and second control information. X bit fields in the first control information indicate the positions of multiple time-frequency resources, and the time-domain positions of any two time-frequency resources among the multiple time-frequency resources are different from each other. In FIG. 13, Time-frequency Resource 1 contains a PSCCH and a PSSCH. The PSCCH is used for carrying the first control information, and the PSSCH is used for carrying second control information and data information. In FIG. 13, multiple time-frequency resources indicated through the first control information within the range of Time-frequency Resource 1 are Time-frequency Resource 1, Time-frequency Resource 2, and Time-frequency Resource 3. Among the multiple time-frequency resources indicated through the first control information, the time-frequency resource which is the earliest in the time domain is denoted as a first time-frequency resource, and the remaining time-frequency resources are denoted as non-first time-frequency resources.

In FIG. 13, for the PSCCH and the PSSCH corresponding to Time-frequency Resource 1, the transmit beam corresponding thereto is Beam 3. For the PSCCHs and the PSSCHs corresponding to Time-frequency Resource 2 and Time-frequency Resource 3, the transmit beam corresponding thereto is Beam 2.

In FIG. 13, the first terminal indicates the beam number of a non-first time-frequency resource through the second control information in Time-frequency Resource 1. For example, the second control information contains multiple bits, and X bits among the multiple bits are used for indicating the beam number of a non-first time-frequency resource, where the value of the X bits is 2.

In FIG. 13, the second control information within the range of Time-frequency Resource 1 indicates that the beam number of the non-first time-frequency resource is 2.

With reference to FIG. 11, a second terminal is UE3, and for the second terminal, resource selection is triggered within slot n, and resources are selected within a resource selection window [*n* + *T*₁, *n* + *T*₂] for PSCCH and PSSCH transmission. The process of resource selection is as follows.

Step 1: Among multiple candidate resources contained within the resource selection window [*n* + *T*₁, *n* + *T*₂]*,* the resources overlapping with time-frequency resources indicated through the first control information from other UEs and having RSRP greater than an RSRP threshold are excluded are excluded.

Step 2: After the resource exclusion in Step 1 is completed, the second terminal randomly selects one or more resources from the remaining candidate resources for sending the PSCCH and the PSSCH of the second terminal.

The preceding measured RSRP in Step 1 is obtained through the measurement of a DMRS (PSBCH DMRS) of a target channel (i.e., a S-SSB channel), or the RSRP may also be measured through an SL-CSI-RS or a PSCCH or PSSCH. The channels such as the S-SSB channels, the PSCCH, and the PSSCH in FIG. 13, are sent by the first terminal. It is assumed that Time-frequency Resource 2 in FIG. 13 is one of the candidate resources within the resource selection window of the second terminal.

For the candidate resource, Time-frequency Resource 2, the process where the second terminal obtains the measured RSRP of this candidate resource is as follows:
The second terminal, by receiving first control information and second control information sent from the first terminal, finds that Time-frequency Resource 2 is indicated by the first terminal to be occupied, and the second control information from the first terminal indicates that the beam number of Time-frequency Resource 2 and Time-frequency Resource 2 is 2. The second terminal measures the PSBCH DMRS corresponding to the S-SSB channel with the beam number of 2 sent by the first terminal and obtains the measured RSRP through the preceding measurement, and the measured RSRP serves as the RSRP of Time-frequency Resource 2.

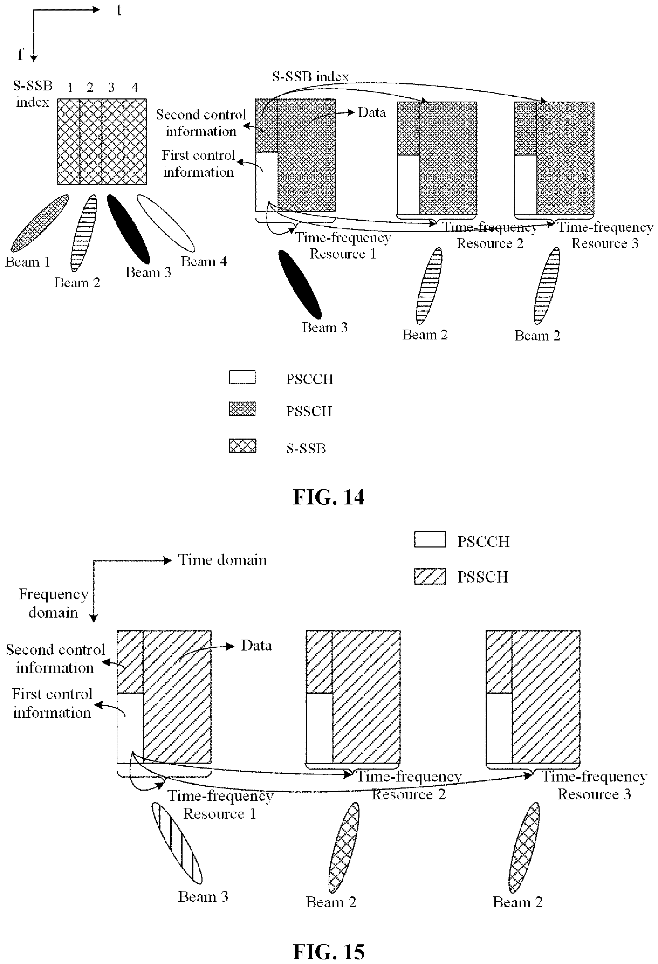

In an example embodiment, with the information indication method in which an S-SSB index is indicated as an example, FIG. 14 is an example diagram of an information indication method according to an embodiment of the present application. A first terminal sends N S-SSB channels, each of which is sent at a fixed time-frequency resource position, at N different fixed time-frequency resource positions, and the S-SSB index corresponding to each S-SSB channel is notified through the S-SSBs or it is specified that the S-SSB indexes of the N S-SSB channels are 1 to N, respectively.

As shown in FIG. 14, the first terminal sends first control information and second control information. X bit fields in the first control information indicate the positions of multiple time-frequency resources, and the time-domain positions of any two time-frequency resources among the multiple time-frequency resources are different from each other. In FIG. 14, Time-frequency Resource 1 contains a PSCCH and a PSSCH. The PSCCH is used for carrying the first control information, and the PSSCH is used for carrying second control information and data information. In FIG. 14, multiple time-frequency resources indicated through the first control information within the range of Time-frequency Resource 1 are Time-frequency Resource 1, Time-frequency Resource 2, and Time-frequency Resource 3. Among the multiple time-frequency resources indicated through the first control information, the time-frequency resource which is the earliest in the time domain is denoted as a first time-frequency resource, and the remaining time-frequency resources are denoted as non-first time-frequency resources.

In FIG. 14, for the PSCCH and the PSSCH corresponding to Time-frequency Resource 1, the transmit beam corresponding thereto is Beam 3. For the PSCCHs and the PSSCHs corresponding to Time-frequency Resource 2 and Time-frequency Resource 3, the transmit beam corresponding thereto is Beam 2.

In FIG. 14, the first terminal indicates the S-SSB index of a non-first time-frequency resource through the second control information in Time-frequency Resource 1. For example, the second control information contains multiple bits, and X bits are used for indicating the S-SSB index of a non-first time-frequency resource, where the value of the X-bits is 2.

In FIG. 14, the second control information within the range of Time-frequency Resource 1 indicates that the S-SSB index corresponding to the non-first time-frequency resource is 2.

As shown in FIG. 11, a second terminal is UE3, and for the second terminal, resource selection is triggered within slot n, and resources are selected within a resource selection window [*n* + *T*₁, *n* + *T*₂] for PSCCH and PSSCH transmission. The process of resource selection is as follows.

Step 1: Among multiple candidate resources contained within the resource selection window [*n* + *T*₁, *n* + *T*₂]*,* the resources overlapping with time-frequency resources indicated through the first control information from other UEs and having RSRP greater than an RSRP threshold are excluded are excluded.

Step 2: After the resource exclusion in Step 1 is completed, the second terminal randomly selects one or more resources from the remaining candidate resources for sending the PSCCH and the PSSCH of the second terminal.

The preceding measured RSRP in Step 1 is obtained through the measurement of a DMRS (PSBCH DMRS) of a target channel (i.e., a S-SSB channel). The channels such as the S-SSB channel, the PSCCH and the PSSCH in FIG. 14 are sent by the first terminal. It is assumed that Time-frequency Resource 2 in FIG. 14 is one of the candidate resources within the resource selection window of the second terminal.

For the candidate resource, Time-frequency Resource 2, the process where the second terminal obtains the measured RSRP of this candidate resource is as follows:
The second terminal, by receiving first control information and second control information sent from the first terminal, finds that Time-frequency Resource 2 is indicated by the first terminal to be occupied, and the second control information from the first terminal indicates that Time-frequency Resource 2 and Time-frequency Resource 2 have a QCL relationship with the S-SSB channel with the index of 2. The second terminal uses the result of the measurement of a DMRS (PSBCH DMRS) of the S-SSB that has a QCL relationship with Time-frequency Resource 2 as the measured RSRP of Time-frequency Resource 2. In FIG. 14, the S-SSB channel with the index of 2 sent by the first terminal has a QCL relationship with Time-frequency Resource 2, and the result of the measurement of the DMRS of the S-SSB channel with the index of 2 by the second terminal thus serves as the measured RSRP of Time-frequency Resource 2.

In an example embodiment, with the indication performed through inserted independent sidelink control information as an example, FIG. 15 is an example diagram of an information indication method according to an embodiment of the present application. The scheme optimization is shown in FIG. 15, and it can be seen from FIG. 15 that a first terminal performs the transmission of control information and data information on Time-frequency Resource 1 to Time-frequency Resource 3. In addition, on Time-frequency Resource 1 to Time-frequency Resource 3, the transmit beams used by the first terminal are Beam 3, Beam 2, and Beam 2, respectively. In this case, it can be considered that there is no QCL relationship between Time-frequency Resource 2 and Time-frequency Resource 1.

When the second terminal measures the RSRP of Time-frequency Resource 2, the measured RSRP of Time-frequency Resource 2 is obtained through the measurement of PSCCH DMRS or a PSSCH DMRS on Time-frequency Resource 1. Since the transmit beam of Time-frequency Resource 1 is different from the transmit beam of Time-frequency Resource 2, the actual RSRPs of Time-frequency Resource 1 and Time-frequency Resource 2 are different from each other. Therefore, when the RSRP of Time-frequency Resource 2 is inferred from the measurement of the RSRP of Time-frequency Resource 1, the inferred RSRP is not accurate. In the case of such inaccurate measurement, the second terminal is unable to accurately determine the actual interference situation on Time-frequency Resource 2, and in a case where whether to use Time-frequency Resource 2 for the transmission of data and control information of the second terminal is determined based on the inaccurate interference situation, the communication will become unreliable.

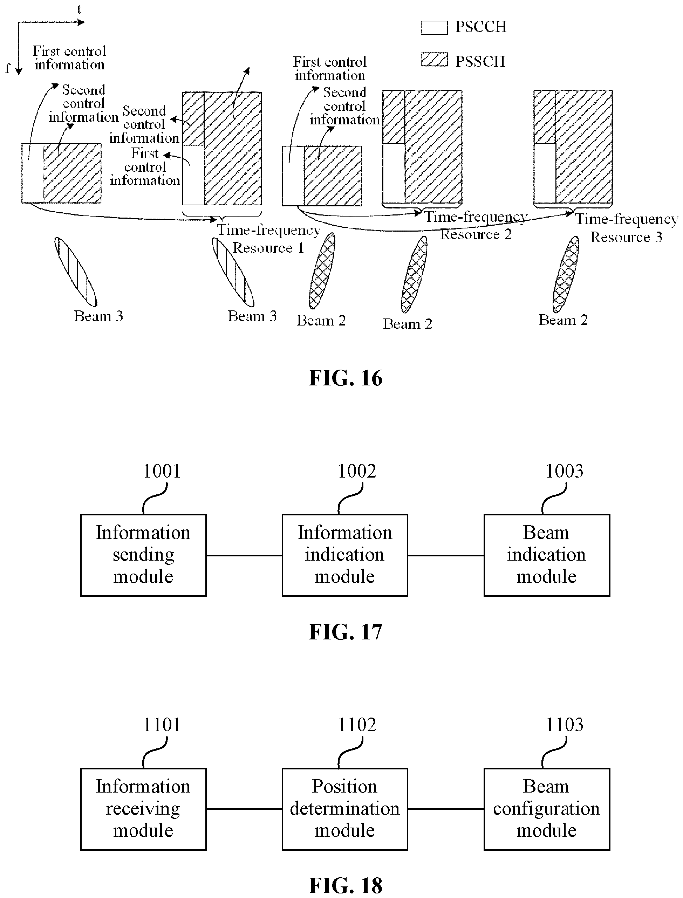

FIG. 16 is an example diagram of an information indication method according to an embodiment of the present application. The improved method of FIG. 15 is shown in FIG. 16. When a target time-frequency resource for sending signaling or data of the first terminal cannot be guaranteed to have the same transmit beam as or be quasi co-located with a previous time-frequency resource for sending data and control information, a new channel is inserted ahead of the target time-frequency resource of the first terminal, and the new channel is quasi co-located with the target time-frequency resource (or with the PSCCH and the PSSCH contained in the target time-frequency resource).

Therefore, the second terminal can obtain the measured RSRP of the target time-frequency resource through the measurement of a DMRS in the region of this new channel region. Since the preceding new information is quasi co-located with the target time-frequency resource, the measured RSRP of the target time-frequency resource can be guaranteed to be accurate. As shown in FIG. 16, the new channel includes a PSCCH and a PSSCH, and the number of frequency-domain resources corresponding to the PSCCH and the number of frequency-domain resources corresponding to the PSSCH are fixed, for example, one sub-channel.

FIG. 17 is a structural diagram of an information indication apparatus according to an embodiment of the present application. The apparatus can execute the method provided by any of the embodiments of the present application and has corresponding functional modules and beneficial effects for executing the method. The apparatus may be implemented by software and/or hardware and specifically includes an information sending module 1001, an information indication module 1002, and a beam indication module 1003.

The information sending module 1001 is configured to send first control information and second control information.

The information indication module 1002 is configured to indicate the position of each of multiple time-frequency resources through the first control information, where the multiple time-frequency resources are different from each other, and a time-frequency resource, which is the earliest in terms of time among the multiple time-frequency resources, is denoted as a first time-frequency resource.

The beam indication module 1003 is configured to indicate, through the first control information or the second control information, beam configuration information of each of multiple non-first time-frequency resources.

In this embodiment of the present application, the first control information and the second control information are sent, the position of each of multiple time-frequency resources is indicated through the first control information, the time-frequency resource, which is the earliest in terms of time, is denoted as a first time-frequency resource, and the beam configuration information of each of multiple non-first time-frequency resources among the multiple time-frequency resources is indicated using the first control information or the second control information, thereby achieving the beam configuration of the time-frequency resource and improving the measurement accuracy of reference signal received power.

Further, based on the aforementioned embodiments of the present application, the beam configuration information in the apparatus includes beam-related information or QCL-related information.

Further, based on the aforementioned embodiments of the present application, the multiple non-first time-frequency resources include a second time-frequency resource among the time-frequency resources, where the second time-frequency resource is a time-frequency resource which is the second earliest in terms of time among the time-frequency resources.

Further, based on the aforementioned embodiments of the present application, the multiple non-first time-frequency resources include all time-frequency resources other than the first time-frequency resource among the multiple time-frequency resources.

Further, based on the aforementioned embodiments of the present application, the beam indication module 1003 includes a beam change indication unit.

The beam change indication unit is configured to indicate, through the first control information or the second control information, whether each of the multiple non-first time-frequency resources has a beam change.

Further, based on the aforementioned embodiments of the present application, the beam indication module 1003 includes a quasi co-location indication unit.

The quasi co-location indication unit is configured to indicate, through the first control information or the second control information, whether each of the multiple non-first time-frequency resources is quasi co-located with the first time-frequency resource.

Further, based on the aforementioned embodiments of the present application, the beam indication module 1003 includes a beam number indication unit.

The beam number indication unit is configured to indicate, through the first control information or the second control information, the beam number of each of the multiple non-first time-frequency resources.

Further, based on the aforementioned embodiments of the present application, the beam change is whether the beam of each of the multiple non-first time-frequency resources changes relative to the beam of the first time-frequency resource.

Further, based on the aforementioned embodiments of the present application, the beam indication module 1003 includes an index quasi co-location indication unit.

The index quasi co-location indication unit is configured to indicate, through the first control information or the second control information, a first channel index, where each of the multiple non-first time-frequency resources is quasi co-located with a first channel corresponding to the first channel index.

Further, based on the aforementioned embodiments of the present application, the index quasi co-location indication unit is specifically configured to indicate, through the first control information or the second control information, an S-SSB index, where each of the multiple non-first time-frequency resources is quasi co-located with an S-SSB channel corresponding to the S-SSB index.

Further, based on the aforementioned embodiments of the present application, the index quasi co-location indication unit is specifically configured to indicate, through the first control information or the second control information, an SL-CSI-RS index, where each of the multiple non-first time-frequency resources is quasi co-located with an SL-CSI-RS corresponding to the SL-CSI-RS index.

Further, based on the aforementioned embodiments of the present application, the index quasi co-location indication unit is specifically configured to indicate, through the first control information or the second control information, a PSCCH or PSSCH index, where each of the multiple non-first time-frequency resources is quasi co-located with a PSCCH or PSSCH corresponding to the PSCCH or PSSCH index.

FIG. 18 is a structural diagram of an information receiving apparatus according to an embodiment of the present application. The apparatus can execute the method provided by any of the embodiments of the present application and has corresponding functional modules and beneficial effects for executing the method. The apparatus may be implemented by software and/or hardware and specifically includes an information receiving module 1101, a position determination module 1102, and a beam configuration module 1103.

The information receiving module 1101 is configured to receive first control information and second control information.

The position determination module 1102 is configured to determine, according to the first control information, the position of each of multiple time-frequency resources, where the multiple time-frequency resources are different from each other, and a time-frequency resource, which is the earliest in terms of time among the multiple time-frequency resources, is denoted as a first time-frequency resource.

The beam configuration module 1103 is configured to indicate, through the first control information or the second control information, indicated beam configuration information of each of multiple non-first time-frequency resources.

Further, based on the aforementioned embodiments of the present application, the beam configuration information includes beam-related information or QCL-related information.

Further, based on the aforementioned embodiments of the present application, the multiple non-first time-frequency resources include a second time-frequency resource among the time-frequency resources, where the second time-frequency resource is a time-frequency resource which is the second earliest in terms of time among the time-frequency resources.

Further, based on the aforementioned embodiments of the present application, the multiple non-first time-frequency resources include all time-frequency resources other than the first time-frequency resource among the multiple time-frequency resources.

Further, based on the aforementioned embodiments of the present application, the apparatus further includes a resource exclusion module which is configured to exclude a candidate time-frequency resource according to the beam configuration information.

Further, based on the aforementioned embodiments of the present application, the condition for excluding the candidate time-frequency resource in the resource exclusion module at least includes: an RSRP measurement value is higher than a threshold.

Further, based on the aforementioned embodiments of the present application, the RSRP measurement value in the resource exclusion module is obtained at least by measuring a DMRS of a target channel, where an index of the target channel is the same as an index indicated through the first control information.

Further, based on the aforementioned embodiments of the present application, the RSRP measurement value in the resource exclusion module is obtained at least by measuring a DMRS of a target channel, where a beam number of the target channel is the same as a beam number indicated through the first control information.

Further, based on the aforementioned embodiments of the present application, the target channel in the resource exclusion module is an S-SSB channel, the index is an S-SSB index, and the DMRS of the target channel includes a PSBCH DMRS.

Further, based on the aforementioned embodiments of the present application, the condition for excluding the candidate time-frequency resource in the resource exclusion module includes at least one of the following conditions.

The sum of an RSRP measurement value and an RSRP compensation value is higher than a threshold.

The difference between an RSRP measurement value and an RSRP compensation value is higher than a threshold.

Further, based on the aforementioned embodiments of the present application, the RSRP compensation value is pre-configured or configured through RRC information.

Further, based on the aforementioned embodiments of the present application, the RSRP compensation value is the difference between a first measured RSRP and a second measured RSRP.

The DMRS for measuring the first measured RSRP is a DMRS contained in the first time-frequency resource.

The DMRS for measuring the second measured RSRP is quasi co-located with each of the multiple non-first time-frequency resources.

Further, based on the aforementioned embodiments of the present application, the condition for excluding the candidate time-frequency resource in the resource exclusion module at least includes: an RSRP is greater than a threshold, where when a first condition is met, the RSRP is the sum of an RSRP measurement value and an RSRP compensation value, and when the first condition is not met, the RSRP is an RSRP measurement value.

Further, based on the aforementioned embodiments of the present application, in a case where the first condition is met, the RSRP compensation value is a non-zero value, and when the first condition is not met, the RSRP compensation value is 0.

Further, based on the aforementioned embodiments of the present application, the first condition includes:
the first control information received or the second control information received indicates that each of the multiple non-first time-frequency resources has a beam change.

Further, based on the aforementioned embodiments of the present application, the first condition includes:
the first control information received or the second control information received indicates that each of the multiple non-first time-frequency resources has no quasi co-location relationship with the first time-frequency resource.

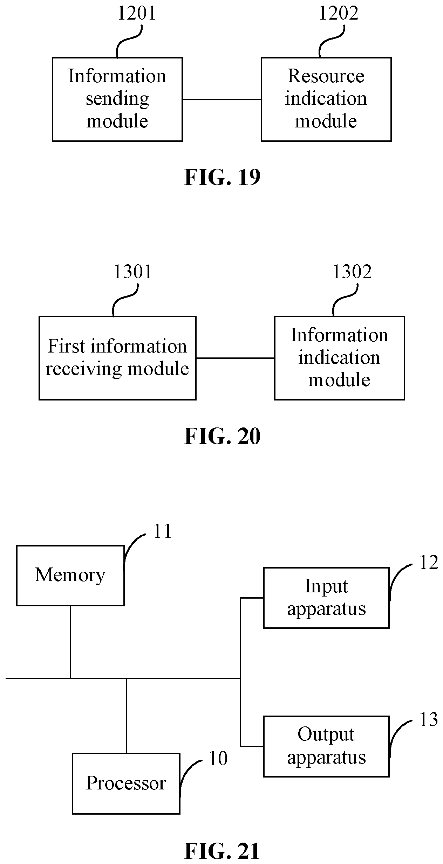

FIG. 19 is a structural diagram of an information indication apparatus according to an embodiment of the present application. The apparatus can execute the method provided by any of the embodiments of the present application and has corresponding functional modules and beneficial effects for executing the method. The apparatus may be implemented by software and/or hardware and specifically includes an information sending module 1201 and a resource indication module 1202.

The information sending module 1201 is configured to send first control information through a first time-frequency resource.

The resource indication module 1202 is configured to indicate, through the first control information, at least one second time-frequency resource, wherein the at least one second time-frequency resource is quasi co-located with the first time-frequency resource.

Further, based on the aforementioned embodiments of the present application, the first control information is sent through a PSCCH, where the PSCCH occupies a fixed number of frequency-domain resources.

Further, based on the aforementioned embodiments of the present application, the time interval between the first time-frequency resource occupied by the PSCCH that sends the first control information and the first one of the at least one second time-frequency resource is greater than or equal to a time threshold.

Further, based on the aforementioned embodiments of the present application, the apparatus further includes a second information sending module which is configured to send second control information, where the first control information is sent through a PSCCH, the second control information is sent through a PSSCH, and the number of frequency-domain resources occupied by the PSCCH and the number of frequency-domain resources occupied by the PSSCH are fixed.

Further, based on the aforementioned embodiments of the present application, the time interval between the first time-frequency resource occupied by the PSCCH and the PSSCH and the first one of the at least one second time-frequency resource is greater than or equal to a time threshold.

FIG. 20 is a structural diagram of an information receiving apparatus according to an embodiment of the present application. The apparatus can execute the method provided by any of the embodiments of the present application and has corresponding functional modules and beneficial effects for executing the method. The apparatus may be implemented by software and/or hardware and specifically includes a first information receiving module 1301 and an information indication module 1302.

The first information receiving module 1301 is configured to receive first control information on a first time-frequency resource.

The information indication module 1302 is configured to determine at least one second time-frequency resource indicated through the first control information, where the at least one second time-frequency resource is quasi co-located with the first time-frequency resource.

Further, based on the aforementioned embodiments of the present application, the first control information is sent through a PSCCH, where the PSCCH occupies a fixed number of frequency-domain resources.

Further, based on the aforementioned embodiments of the present application, the time interval between the first time-frequency resource occupied by the PSCCH that sends the first control information and the first one of the at least one second time-frequency resource is greater than or equal to a time threshold.

Further, based on the aforementioned embodiments of the present application, the apparatus further includes a second information receiving module which is configured to receive second control information, where the first control information is sent through a PSCCH, the second control information is sent through a PSSCH, and the number of frequency-domain resources occupied by the PSCCH and the number of frequency-domain resources occupied by the PSSCH are fixed.

Further, based on the aforementioned embodiments of the present application, the time interval between the first time-frequency resource occupied by the PSCCH and the PSSCH and the first one of the at least one second time-frequency resource is greater than or equal to a time threshold.

FIG. 21 is a structural diagram of an electronic device according to an embodiment of the present application. The electronic device includes a processor 10, a memory 11, an input apparatus 12, and an output apparatus 13. One or more processors 10 may be included in the electronic device. One processor 10 is shown as an example in FIG. 21. The processor 10, the memory 11, the input apparatus 12, and the output apparatus 13 in the electronic device may be connected via a bus or in other manners. The connection via a bus is shown as an example in FIG. 21.

As a computer-readable storage medium, the storage device 11 may be configured to store software programs, computer-executable programs and modules such as modules corresponding to the apparatus described in the embodiments of the present application (the information sending module 1001, the information indication module 1002, and the beam indication module 1003; the information receiving module 1101, the position determination module 1102, and the beam configuration module 1103; the information sending module 1201 and the resource indication module 1202; or the first information receiving module 1301 and the information indication module 1302). The processor 10 runs the software programs, instructions, and modules stored in the memory 11 to perform various function applications and data processing of the electronic device, that is, the preceding method is implemented.

The memory 11 may mainly include a program storage region and a data storage region, where the program storage region may store an operating system and an application program required by at least one function, and the data storage region may store data created according to the use of the electronic device. In addition, the memory 11 may include a high-speed random-access memory and may further include a non-volatile memory, such as at least one disk memory, a flash memory, or another non-volatile solid-state memory. In some examples, the memory 11 may further include memories which are remotely disposed with respect to the processor 10, and these remote memories may be connected to the electronic device via a network. Examples of the preceding network include, but are not limited to, the Internet, an intranet, a local area network, a mobile communication network, and a combination thereof.

The input apparatus 12 may be configured to receive inputted digital or character information and generate key signal input related to user settings and function control of the electronic device. The output apparatus 13 may include a display device such as a display screen.

The embodiments of the present application further provide a storage medium including computer-executable instructions. When executed by a computer processor, the computer-executable instructions are configured to cause the computer processor to perform an information indication method, which includes:
first control information and second control information are sent;
the position of each of multiple time-frequency resources is indicated through the first control information, where the multiple time-frequency resources are different from each other, and a time-frequency resource, which is the earliest in terms of time among the multiple time-frequency resources, is denoted as a first time-frequency resource; and
beam configuration information of each of multiple non-first time-frequency resources among the multiple time-frequency resources is indicated through the first control information or the second control information.

Alternatively, when executed by the computer processor, the computer-executable instructions are configured to cause the computer processor to perform an information receiving method, which includes:
first control information and second control information are received; and
the position of each of multiple time-frequency resources is determined according to the first control information, where the multiple time-frequency resources are different from each other, and a time-frequency resource, which is the earliest in terms of time among the multiple time-frequency resources, is denoted as a first time-frequency resource; and
beam configuration information of each of the multiple time-frequency resources except the first time-frequency resource is determined according to the first control information or the second control information.

Alternatively, when executed by the computer processor, the computer-executable instructions are configured to cause the computer processor to perform an information indication method, which includes:
first control information is sent through a first time-frequency resource; and
at least one second time-frequency resource is indicated through the first control information, and the at least one second time-frequency resource is quasi co-located with the first time-frequency resource.

Alternatively, when executed by the computer processor, the computer-executable instructions are configured to cause the computer processor to perform an information receiving method, which includes:
first control information is received on a first time-frequency resource; and
at least one second time-frequency resource indicated through the first control information is determined, where the at least one second time-frequency resource is quasi co-located with the first time-frequency resource.

From the description of the aforementioned embodiments, it is apparent to those skilled in the art that the present application may be implemented by software plus necessary general-purpose hardware or may of course be implemented by hardware. However, in many cases, the former is a preferred implementation. Based on this understanding, the solutions of the present application substantially or the part contributing to the related art may be embodied in the form of a software product. The computer software product may be stored in a computer-readable storage medium such as a floppy disk, a read-only memory (ROM), a random-access memory (RAM), a flash memory, a hard disk or an optical disk of a computer and includes several instructions for causing a computer device (which may be a personal computer, a server or a network device) to perform the method described in the embodiments of the present application.

It is to be noted that units and modules involved in the preceding apparatus embodiments are divided according to functional logic, and the division is not limited to this as long as the corresponding functions can be implemented. In addition, the specific names of functional units are intended to distinguish between each other and are not intended to limit the scope of the present application.

It is to be understood by those having ordinary skill in the art that some or all steps of the preceding methods and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by several physical components. Some or all physical components are implementable as software executed by a processor such as a central processing unit, a digital signal processor or a microprocessor, are implementable as hardware, or are implementable as integrated circuits such as application-specific integrated circuits. Such software may be distributed on computer-readable media. The computer-readable media may include computer storage media (or non-transitory media) and communication media (or transitory media). As known to those having ordinary skill in the art, the term, the computer storage media, includes volatile and non-volatile as well as removable and non-removable media implemented in any method or technology for storing information (such as computer-readable instructions, data structures, program modules or other data). The computer storage media include, but are not limited to, a random-access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storages, a magnetic cassette, a magnetic tape, a magnetic disk or other magnetic storage devices, or any other medium that can be used for storing desired information and can be accessed by a computer. Moreover, as known to those having ordinary skill in the art, the communication media generally include computer-readable instructions, data structures, program modules, or other data in carriers or in modulated data signals transported in other transport mechanisms and may include any information delivery medium.

The preferred embodiments of the present application are illustrated with reference to drawings and are not intended to limit the scope of the present application. Any modification, equivalent substitution and improvement made by those skilled in the art without departing from the scope and spirit of the present application shall fall within the scope of the present application.

## Claims

1. An information indication method, applied to a first terminal, comprising:
sending first control information and second control information;
indicating a position of each of a plurality of time-frequency resources through the first control information, wherein the plurality of time-frequency resources are different from each other, and a time-frequency resource, which is the earliest in terms of time among the plurality of time-frequency resources, is denoted as a first time-frequency resource; and
indicating, through the first control information or the second control information, beam configuration information of each of a plurality of non-first time-frequency resources among the plurality of time-frequency resources.

2. The method of claim 1, wherein the beam configuration information comprises beam-related information or quasi co-location-related information.

3. The method of claim 1, wherein the plurality of non-first time-frequency resources comprise:
a second time-frequency resource among the plurality of time-frequency resources, wherein the second time-frequency resource is a time-frequency resource which is the second earliest in terms of time among the plurality of time-frequency resources.

4. The method of claim 1, wherein the plurality of non-first time-frequency resources comprise:
all time-frequency resources other than the first time-frequency resource among the plurality of time-frequency resources.

5. The method of claim 2, wherein the beam configuration information comprises the beam-related information, and the indicating, through the first control information or the second control information, beam configuration information of each of a plurality of non-first time-frequency resources comprises:
indicating, through the first control information or the second control information, whether each of the plurality of non-first time-frequency resources has a beam change.

6. The method of claim 2, wherein the beam configuration information comprises the quasi co-location-related information, and the indicating, through the first control information or the second control information, beam configuration information of each of a plurality of non-first time-frequency resources comprises:
indicating, through the first control information or the second control information, whether each of the plurality of non-first time-frequency resources is quasi co-located with the first time-frequency resource.

7. The method of claim 2, wherein the beam configuration information comprises the beam-related information, and the indicating, through the first control information or the second control information, beam configuration information of each of a plurality of non-first time-frequency resources comprises:
indicating, through the first control information or the second control information, a beam number of each of the plurality of non-first time-frequency resources.

8. The method of claim 5, wherein the beam change is whether a beam of a non-first time-frequency resource of the plurality of non-first time-frequency resources changes relative to a beam of the first time-frequency resource.

9. The method of claim 2, wherein the beam configuration information comprises the quasi co-location-related information, and the indicating, through the first control information or the second control information, beam configuration information of each of a plurality of non-first time-frequency resources comprises:
indicating, through the first control information or the second control information, a first channel index, wherein each of the plurality of non-first time-frequency resources is quasi co-located with a first channel corresponding to the first channel index.

10. The method of claim 9, wherein the indicating, through the first control information or the second control information, a first channel index, wherein each of the plurality of non-first time-frequency resources is quasi co-located with a first channel corresponding to the first channel index, comprises:
indicating, through the first control information or the second control information, a sidelink synchronization signal block (S-SSB) index, wherein each of the plurality of non-first time-frequency resources is quasi co-located with an S-SSB channel corresponding to the S-SSB index.

11. The method of claim 9, wherein the indicating, through the first control information or the second control information, a first channel index, wherein each of the plurality of non-first time-frequency resources is quasi co-located with a first channel corresponding to the first channel index, comprises:
indicating, through the first control information or the second control information, a sidelink channel state information-reference signal (SL-CSI-RS) index, wherein each of the plurality of non-first time-frequency resources is quasi co-located with an SL-CSI-RS corresponding to the SL-CSI-RS index.

12. The method of claim 9, wherein the indicating, through the first control information or the second control information, a first channel index, wherein each of the plurality of non-first time-frequency resources is quasi co-located with a first channel corresponding to the first channel index, comprises:
indicating, through the first control information or the second control information, a physical sidelink control channel (PSCCH) index or a physical sidelink shared channel (PSSCH) index, wherein each of the plurality of non-first time-frequency resources is quasi co-located with a PSCCH corresponding to the PSCCH index or a PSSCH corresponding to the PSSCH index.

13. An information receiving method, applied to a second terminal, comprising:
receiving first control information and second control information;
determining a position of each of a plurality of time-frequency resources according to the first control information, wherein the plurality of time-frequency resources are different from each other, and a time-frequency resource, which is the earliest in terms of time among the plurality of time-frequency resources, is denoted as a first time-frequency resource; and
determining beam configuration information of each of a plurality of non-first time-frequency resources according to the first control information or the second control information.

14. The method of claim 13, wherein the beam configuration information comprises beam-related information or quasi co-location-related information.

15. The method of claim 13, wherein the plurality of non-first time-frequency resources comprise:
a second time-frequency resource among the plurality of time-frequency resources, wherein the second time-frequency resource is a time-frequency resource which is the second earliest in terms of time among the plurality of time-frequency resources.

16. The method of claim 13, wherein the plurality of non-first time-frequency resources comprise:
all time-frequency resources other than the first time-frequency resource among the plurality of time-frequency resources.

17. The method of claim 13, further comprising:
excluding a candidate time-frequency resource according to the beam configuration information.

18. The method of claim 17, wherein a condition for excluding the candidate time-frequency resource at least comprises: a reference signal received power (RSRP) measurement value is higher than a first threshold.

19. The method of claim 18, wherein the RSRP measurement value is obtained at least by measuring a demodulation reference signal (DMRS) of a target channel, wherein an index of the target channel is the same as an index indicated through the first control information.

20. The method of claim 18, wherein the RSRP measurement value is obtained at least by measuring a DMRS of a target channel, wherein a beam number of the target channel is the same as a beam number indicated through the first control information.

21. The method of claim 19 or 20, wherein the target channel is a sidelink synchronization signal block (S-SSB) channel, the index of the target channel is an S-SSB index, and the DMRS of the target channel comprises a physical sidelink broadcast channel (PSBCH) DMRS.

22. The method of claim 17, wherein a condition for excluding the candidate time-frequency resource comprises at least one of the following:
a sum of the RSRP measurement value and an RSRP compensation value is higher than a second threshold; or
a difference between an RSRP measurement value and an RSRP compensation value is higher than a third threshold.

23. The method of claim 22, wherein the RSRP compensation value is pre-configured or configured through radio resource control (RRC) information.

24. The method of claim 22, wherein the RSRP compensation value is a difference between a first measured RSRP and a second measured RSRP;
a DMRS for measuring the first measured RSRP is a DMRS contained in the first time-frequency resource; and
a DMRS for measuring the second measured RSRP is quasi co-located with each of the plurality of non-first time-frequency resources.

25. The method of claim 17, wherein a condition for excluding the candidate time-frequency resource at least comprises: an RSRP is greater than a fourth threshold, wherein when a first condition is met, the RSRP is a sum of the RSRP measurement value and an RSRP compensation value, and when the first condition is not met, the RSRP is an RSRP measurement value.

26. The method of claim 22, wherein when a first condition is met, the RSRP compensation value is a non-zero value, and when the first condition is not met, the RSRP compensation value is 0.

27. The method of claim 22 or 23, wherein the first condition comprises:
the first control information received or the second control information received indicates that a beam of a non-first time-frequency resource of the plurality of non-first time-frequency resources changes.

28. The method of claim 22 or 23, wherein the first condition comprises:
the first control information received or the second control information received indicates that a non-first time-frequency resource of the plurality of non-first time-frequency resources has no quasi co-location relationship with the first time-frequency resource.

29. An information indication method, applied to a first terminal, comprising:
sending first control information through a first time-frequency resource; and
indicating, through the first control information, at least one second time-frequency resource, wherein the at least one second time-frequency resource is quasi co-located with the first time-frequency resource.

30. The method of claim 29, wherein the first control information is sent through a physical sidelink control channel (PSCCH), wherein the PSCCH occupies a fixed number of frequency-domain resources.

31. The method of claim 29 or 30, wherein a time interval between the first time-frequency resource occupied by the PSCCH that sends the first control information and a first one of the at least one second time-frequency resource is greater than or equal to a first time threshold.

32. The method of claim 29, further comprising:
sending second control information, wherein the first control information is sent through a PSCCH, the second control information is sent through a physical sidelink shared channel (PSSCH), and a number of frequency-domain resources occupied by the PSCCH and a number of frequency-domain resources occupied by the PSSCH are fixed.

33. The method of claim 32, wherein a time interval between the first time-frequency resource occupied by the PSCCH and the PSSCH and a first one of the at least one second time-frequency resource is greater than or equal to a first time threshold.

34. An information receiving method, applied to a second terminal, comprising:
receiving first control information on a first time-frequency resource; and
determining at least one second time-frequency resource indicated through the first control information, wherein the at least one second time-frequency resource is quasi co-located with the first time-frequency resource.

35. The method of claim 34, wherein the first control information is sent through a physical sidelink control channel (PSCCH), wherein the PSCCH occupies a fixed number of frequency-domain resources.

36. The method of claim 34 or 35, wherein a time interval between the first time-frequency resource occupied by the PSCCH that sends the first control information and a first one of the at least one second time-frequency resource is greater than or equal to a second time threshold.

37. The method of claim 34, further comprising:
receiving second control information, wherein the first control information is sent through a PSCCH, the second control information is sent through a physical sidelink shared channel (PSSCH), and a number of frequency-domain resources occupied by the PSCCH and a number of frequency-domain resources occupied by the PSSCH are fixed.

38. The method of claim 37, wherein a time interval between the first time-frequency resource occupied by the PSCCH and the PSSCH and a first one of the at least one second time-frequency resource is greater than or equal to a second time threshold.

39. An electronic device, comprising:
one or more processors; and
a memory, configured to store one or more programs;
wherein the one or more programs, when executed by the one or more processors, enable the one or more processors to implement the method of any one of claims 1 to 38.

40. A computer-readable storage medium storing one or more programs, wherein the one or more programs are executable by one or more processors to implement the method of any one of claims 1 to 38.
